# EUROPEAN PATENT SPECIFICATION

(11) **EP 3 553 676 B1**
(45) Date of publication and mention of the grant of the patent: **31.12.2025**
(21) Application number: 17885725.6
(22) Date of filing: 25.07.2017
(51) Int. Cl.: H04M 1/725, G06F 16/9535, G06F 16/9536, G06F 16/00

(54) **SMART RECOMMENDATION METHOD AND TERMINAL**
INTELLIGENTES EMPFEHLUNGSVERFAHREN UND ENDGERÄT
PROCÉDÉ ET TERMINAL INTELLIGENTS DE RECOMMANDATIONS

(30) Priority: 27.12.2016 CN 201611224999
(43) Date of publication of application: 16.10.2019
(73) Proprietor: Huawei Technologies Co., Ltd., Longgang District Shenzhen, Guangdong 518129 (CN)
(72) Inventor: LIU, Mohan, Shenzhen, Guangdong 518129 (CN); ZHOU, Li, Shenzhen, Guangdong 518129 (CN); JIANG, Jiyong, Shenzhen, Guangdong 518129 (CN); PAN, Tao, Shenzhen, Guangdong 518129 (CN)
(74) Representative: Epping - Hermann - Fischer
(86) International application number: PCT/CN2017/094373
(87) International publication number: WO 2018/120813

(56) References cited:
- CN-A- 103 577 403
- CN-A- 103 870 126
- CN-A- 103 870 126
- CN-A- 104 142 960
- CN-A- 104 462 373
- US-A1- 2013 198 506
- US-A1- 2013 198 506
- US-A1- 2016 292 769

## Description

### TECHNICAL FIELD

Implementations of the present disclosure relate to communications technologies, and in particular, to an intelligent recommendation method and a terminal.

### BACKGROUND

With development of machine learning and deep learning methods, and with enhancement of a computing capability and a storage capability of a mobile terminal, some intelligent recommendation services can be implemented on the mobile terminal. To be specific, the mobile terminal can predict a preference of a user through computation of the mobile terminal, and recommend a corresponding service to the user based on the preference of the user.

Currently, a manner of implementing intelligent recommendation on a mobile terminal is as follows: Service code of an intelligent service in the mobile terminal carries a machine learning algorithm that needs to be used by the intelligent service; and the mobile terminal obtains, from the service code, the machine learning algorithm corresponding to the intelligent service, and then based on the machine learning algorithm, predicts and recommends a preference of a user. However, the mobile terminal may include a plurality of intelligent services. If a machine learning algorithm is carried in service code of each intelligent service, code redundancy may be caused.

US 2016/292769 A1 relates to a method that employs adaptive machine learning to provide recommendations to entities that select items for clients from an item inventory, the method comprising: (a) storing client information, for each of a plurality of clients, that indicates client attributes associated with each of the plurality of clients; (b) storing item information, for each of a plurality of items included in an item inventory, that indicates item attributes associated with each of the plurality of items included in the item inventory; (c) storing a plurality of different recommendation algorithms each of which utilizes the client information and the item information in a different manner than the other algorithms to identify, for any particular one of the clients, a subset of the items in the item inventory that is recommended for the particular one of the clients; performing the following steps (d), (e) and (f) for each client of two or more of the clients: (d) identifying a plurality of different subsets of the items in the item inventory that are recommended for one of the clients by using each of two or more of the plurality of different recommendation algorithms to generate a different subset of the items in the inventory that is recommended for the one of the clients; (e) selecting for display, to an entity that is tasked with selecting items from the item inventory for the one of the clients, information about two or more of the plurality of different subsets of the items in the inventory that are identified as a result of the identifying step; and (f) receiving client feedback information from the one or more of the clients; and (g) employing adaptive machine learning to modify, in dependence on the client feedback information received at instances of the receiving client feedback step (f), at least one of the stored client information or the stored item information, so that further instances of the identifying step (d) utilize the modified at least one of the stored client information or the stored item information.

US 2013/198506 A1 relates to a method for making intelligent application and setting recommendations, comprising: determining, by a device, a current context of a user of the device in response to the device being one of unlocked and turned-on; determining, by the device, if the current context of the user has changed from a previous context of the user at a time when the device was one of locked and turned-off; and presenting a recommendation on a display of the device, the recommendation comprising at least one of an application for operation on the device, options for operation of the device, and operating settings of the device, based on the current context of the user, in response to determining that the current context of the user has changed from the previous context.

### SUMMARY

Embodiments of the present invention are defined by the appended claims. Thus, the invention is set up by the appended set of claims. In the following, parts of the description and drawings referring to implementations which are not covered by the claims are not presented as embodiments of the invention, but as examples useful for understanding the invention.

An intelligent recommendation method and a terminal are provided, which can reduce code redundancy.

According to a first aspect, an implementation of the present disclosure provides an intelligent recommendation method applied to a terminal. The terminal includes a recommendation application. The method includes: receiving, by the terminal, a service request of the recommendation application, where the service request includes a configuration file generated by the recommendation application, and the configuration file includes at least an algorithm parameter and portfolio information that is used to identify an algorithm portfolio structure; invoking, by the terminal, at least one algorithm from a local algorithm library of the terminal based on the algorithm parameter and the portfolio information; predicting, by the terminal based on the at least one algorithm and user data of the terminal, at least one service currently required by a user of the terminal, where the user data of the terminal is stored in a personal database that is located in the terminal; and displaying, by the terminal, at least one icon corresponding to the at least one service. The terminal uses an algorithm in the local algorithm library to perform computation and prediction. Therefore, the algorithm does not need to be carried in the configuration file of each application, and code redundancy is reduced.

Optionally, the method further includes: after the displaying, by the terminal, at least one icon corresponding to the at least one service, receiving, by the terminal, a selection operation on a first icon, where the first icon is one of the at least one icon; and displaying, by the terminal based on the selection operation, an operation interface of a service corresponding to the first icon. After the user selects an icon, the terminal can directly open an operation interface of a service corresponding to the icon.

Optionally, the method further includes: before the receiving, by the terminal, a service request of the recommendation application, receiving, by the terminal, a first touch operation used to open the recommendation application.

Optionally, the displaying, by the terminal, at least one icon corresponding to the at least one service includes: opening, by the terminal, the recommendation application, and displaying the at least one icon corresponding to the at least one service.

The personal database includes a raw database, a personal knowledge base, and a rule base; the raw database is used to store personalized data that is of the user of the terminal and that is collected by the terminal; the personal knowledge base is used to store a personal label of the user obtained after the terminal analyzes the personalized data; the rule base is used to store a behavior rule; and the user data includes the personalized data, the personal label, and the behavior rule.

Optionally, the algorithm library includes at least one algorithm module, and each algorithm module includes at least one algorithm. The algorithm library includes any one or more of the following algorithm modules: an optimization algorithm module, a regression analysis module, a dimensionality reduction algorithm module, a classification algorithm module, a clustering algorithm module, and a deep learning module.

The algorithm parameter includes an algorithm identifier and a dependency algorithm identifier. Optionally, the algorithm parameter further includes any one or more of the following: an input parameter of an algorithm, a data input format of the algorithm, a data output format of the algorithm, an incremental parameter, and a model parameter of the algorithm.

According to a second aspect, an implementation of the present disclosure provides a terminal, including: a display; one or more processors; and one or more storages, where the one or more storages store one or more computer programs, the one or more computer programs include an instruction, and when the instruction is executed by the one or more processors, the terminal executes any method in the first aspect.

According to a third aspect, an implementation of the present disclosure provides a terminal, including: an obtaining module, an invocation module, a prediction module, and a display module. The obtaining module is configured to receive a service request of a recommendation application, where the service request includes a configuration file, the configuration file includes at least an algorithm parameter and portfolio information that is used to identify an algorithm portfolio structure, and the recommendation application is included in the terminal. The invocation module is configured to invoke at least one algorithm from an algorithm library of the terminal based on the algorithm parameter and the portfolio information. The prediction module is configured to predict, based on the at least one algorithm and user data of the terminal, at least one service currently required by a user of the terminal, where the user data of the terminal is stored in a personal database that is located in the terminal. The display module is configured to display at least one icon corresponding to the at least one service.

Optionally, the terminal further includes an input module. The input module is configured to: after the display module displays the at least one icon corresponding to the at least one service, receive a selection operation on a first icon, where the first icon is one of the at least one icon. The display module is further configured to display, based on the selection operation, an operation interface of a service corresponding to the first icon.

Optionally, the input module is further configured to: before the obtaining module receives the service request of the recommendation application, receive a first touch operation used to open the recommendation application.

The modules included in the terminal are configured to implement the methods in the first aspect, and the modules may be implemented by hardware or software.

According to a fourth aspect, an implementation of the present disclosure provides an intelligent recommendation apparatus included in a terminal. The apparatus has a function of implementing terminal behavior in the methods in the first aspect. The function may be implemented by using hardware, or implemented by executing corresponding software by hardware. The hardware or software includes one or more modules or units that correspond to the foregoing function.

According to a fifth aspect, an implementation of the present disclosure provides a computer program product including an instruction. When the computer program product runs on an electronic device, the electronic device executes the method in the first aspect.

According to a sixth aspect, an implementation of the present disclosure provides a computer readable storage medium, including an instruction. When the instruction runs on an electronic device, the electronic device executes the method in the first aspect.

According to a seventh aspect, an implementation of the present disclosure further provides a data processing system, including modules configured to execute the methods provided in the first aspect.

### BRIEF DESCRIPTION OF DRAWINGS

FIG 1 is a partial structural block diagram of a terminal according to an implementation of the present disclosure;
FIG 2 is a schematic architectural diagram of a service recommendation platform according to an implementation of the present disclosure;
FIG 3 is a schematic architectural diagram of an algorithm platform in a service recommendation platform according to an implementation of the present disclosure;
FIG 4 is a flowchart of an intelligent recommendation method applied to a terminal according to an implementation of the present disclosure;
FIG 5 is a flowchart of a method for invoking an algorithm platform according to an implementation of the present disclosure;
FIG 6 is a node flowchart according to an implementation of the present disclosure;
FIG 7 is a schematic diagram of an algorithm layer according to an implementation of the present disclosure;
FIG 8 is a flowchart of a model training method according to an implementation of the present disclosure; and
FIG 9A to FIG 9C are schematic diagrams of user interfaces when a method in an implementation is applied.

### DESCRIPTION OF IMPLEMENTATIONS

To make descriptions of the following implementations clear and concise, brief descriptions of related concepts or technologies are given first:
An engine (Engine) is a core component of a development program or system on an electronic platform. A developer can use the engine to quickly establish and lay out a function required for a program, or use the engine to assist in running of a program. Usually, the engine is a program or a support part of a system. Common program engines include a game engine, a search engine, an antivirus engine, and the like.

Decoupling is separating modules in a program that are unrelated to each other or are related to each other in a limited manner.

An interface is an invoking or communication manner negotiated between modular programs. Because modules are functionally decoupled, information that needs to be shared can be defined in the interface.

A model is used to describe a relationship between data, for example, may be a set of data used to describe a user preference.

An algorithm is a set of well-defined rules used by a computer to resolve a problem within a finite number of steps.

In terms of a callback object, an object is an encapsulation body of data and a method. A program designer executes various methods of the object to change a status of the object (to be specific, change attribute data of the object), so that an "event" occurs on the object. When the "event" occurs on the object, the object usually needs to send a "message" to another related object, to request the another related object to perform processing. In this case, the object on which the event occurs and that requests the another object to perform processing is referred to as an "event object", and the object that processes the event is referred to as a "callback object".

A callback function is processing an event by a callback object.

A class is a data structure in object-oriented programming. A format of the class usually includes a description part and an implementation part. The description part is used to describe a member in this service class, and includes a description of a data member and a description of a member function. The implementation part is a definition of the member function. The member function is used to operate the data member, and is also referred to as a "method". In a word, the description part is used to describe a function of the class, and the implementation part is used to describe how to implement the function of the class. The data structure is a form of data. The data structure is an organization manner of information, for the purpose of improving efficiency of an algorithm. The data structure usually corresponds to a set of algorithms, and an operation can be performed on data in the data structure by using the set of algorithms.

In terms of encapsulation, in programming, encapsulation means enclosing a process and data, so that data can be accessed only by using a defined interface. To be specific, the real world can be described as a series of fully autonomous and encapsulated objects, and these objects access another object by using a protected interface.

The implementations of the present disclosure can be applied to a terminal. The terminal may be, for example, a mobile phone, a tablet computer (Tablet Computer), a laptop computer (Laptop Computer), a digital camera, a personal digital assistant (personal digital assistant, PDA for short), a navigation apparatus, a mobile Internet device (Mobile Internet Device, MID), or a wearable device (Wearable Device).

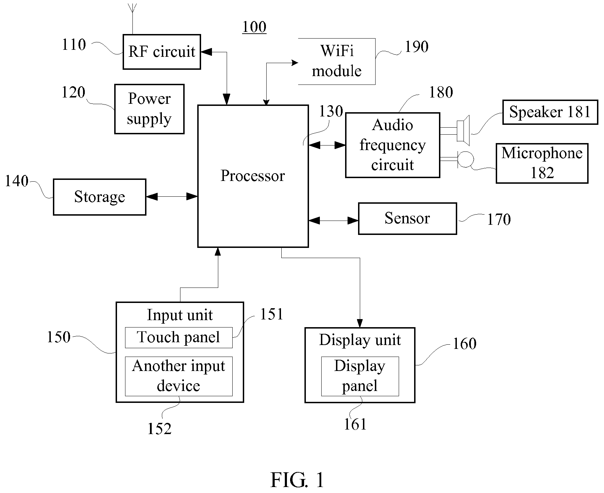

FIG 1 is a partial structural block diagram of a terminal according to an implementation of the present disclosure. That the terminal is a mobile phone 100 is used as an example for description. Referring to FIG 1, the mobile phone 100 includes components such as a radio frequency (Radio Frequency, RF) circuit 110, a power supply 120, a processor 130, a storage 140, an input unit 150, a display unit 160, a sensor 170, an audio frequency circuit 180, and a Wireless Fidelity (wireless fidelity, WiFi) module 190. A person skilled in the art can appreciate that a structure of the mobile phone shown in FIG 1 does not constitute a limitation on a mobile phone. The structure may include more or fewer components than those shown in the figure, or may combine some components, or have different component arrangements.

The following describes the components of the mobile phone 100 in detail with reference to FIG 1.

The RF circuit 110 may be configured to send and receive information, or send and receive a signal during a call. For example, the RF circuit 110 may send downlink data received from a base station to the processor 130 for processing, and send uplink data to the base station. Generally, the RF circuit includes but is not limited to an RF chip, an antenna, at least one amplifier, a transceiver, a coupler, a low noise amplifier (Low Noise Amplifier, LNA), a duplexer, and a radio frequency switch. In addition, the RF circuit 110 may further perform wireless communication with a network and another device. The wireless communication may use any communications standard or protocol, including but not limited to a Global System for Mobile Communications (Global System of Mobile communication, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), or Long Term Evolution (Long Term Evolution, LTE).

The storage 140 may be configured to store a software program and a module. The processor 130 runs the software program and the module that are stored in the storage 140 to perform various function applications of the mobile phone 100 and process data. The storage 140 may mainly include a program storage area and a data storage area. The program storage area may store an operating system, an application program required by at least one function (for example, a sound playing function or an image playing function), and the like. The data storage area may store data (for example, audio data or a phone book) created based on use of the mobile phone 100, and the like. In addition, the storage 140 may include a high-speed random access memory, or may include a nonvolatile memory, for example, at least one magnetic disk storage device, flash memory device, or another volatile solid-state storage device. The storage 140 may further store a personal database and an algorithm library. The personal database includes a raw database, a personal knowledge base, and a rule base. The algorithm library may include one or more algorithm modules, and each algorithm module may include one or more algorithms.

The input unit 150 may be configured to: receive entered digit or character information, and generate key signal input related to user settings and function control of the mobile phone 100. Specifically, the input unit 150 may include a touch panel 151 and another input device 152. The touch panel 151, also referred to as a touchscreen, may collect a touch operation of a user on or near the touch panel 151 (for example, an operation of the user on the touch panel 151 or near the touch panel 151 by using any proper object or accessory such as a finger or a stylus), and drive a corresponding connection apparatus based on a preset program. Optionally, the touch panel 151 may include two parts: a touch detection apparatus and a touch controller. The touch detection apparatus detects a touch orientation of the user, detects a signal brought by a touch operation, and transfers the signal to the touch controller. The touch controller receives touch information from the touch detection apparatus, converts the touch information into touch point coordinates, then sends the touch point coordinates to the processor 130, and can receive a command sent by the processor 130 and execute the command. In addition, the touch control panel 151 may be implemented in a plurality of types such as a resistive type, a capacitive type, an infrared type, or a surface acoustic wave type. In addition to the touch panel 151, the input unit 150 may further include the another input device 152. Specifically, the another input device 152 may include but is not limited to one or more of a physical keyboard, a function key (for example, a volume control key or an on/off key), a trackball, a mouse, a joystick, and the like. The display unit 160 may be configured to display information entered by a user or information provided for the user and various menus of the mobile phone 100. The display unit 160 may include a display panel 161. Optionally, the display panel 161 may be configured in a form of a liquid crystal display (liquid crystal display, LCD for short), an organic light-emitting diode (organic light-emitting diode, OLED for short), or the like. Further, the touch panel 151 may cover the display panel 161. After detecting a touch operation on or near the touch panel 151, the touch panel 151 transfers the touch operation to the processor 130 to determine a type of a touch event. Subsequently, the processor 130 provides a corresponding visual output on the display panel 161 based on the type of the touch event. In FIG 1, the touch panel 151 and the display panel 161 are used as two independent components to implement an input function and an output function of the mobile phone 100. However, in some implementations, the touch panel 151 and the display panel 161 may be integrated to implement the input function and the output function of the mobile phone 100.

The mobile phone 100 may further include at least one sensor 170, for example, an optical sensor, a motion sensor, or another sensor. Specifically, the optical sensor may include an ambient light sensor and a proximity sensor. The ambient light sensor can adjust luminance of the display panel 161 based on brightness of ambient light. The proximity sensor can turn off the display panel 161 and/or backlight when the mobile phone 100 approaches an ear. As a motion sensor, an accelerometer sensor can detect acceleration values in directions (generally three axes), can detect a value and a direction of gravity when stationary, and can be applied to applications for identifying a mobile phone posture (for example, switching between landscape and portrait screens, related games, or magnetometer posture calibration), a function related to vibration identification (such as a pedometer or a knock), and the like. Other sensors such as a gyroscope, a barometer, a hygrometer, a thermometer, or an infrared sensor that may also be configured in the mobile phone 100 are not described in detail herein.

The audio frequency circuit 180, a speaker 181, and a microphone 182 may provide audio interfaces between a user and the mobile phone 100. The audio frequency circuit 180 may convert received audio data into an electrical signal, and transmit the electrical signal to the speaker 181, and the speaker 181 converts the electrical signal into a sound signal for outputting. In addition, the microphone 182 converts a collected sound signal into an electrical signal; the audio frequency circuit 180 receives the electrical signal, converts the electrical signal into audio data, and outputs the audio data to the RF circuit 110 to send the audio data to another mobile phone or the like, or outputs the audio data to the storage 140 for further processing.

WiFi is a short-range wireless transmission technology. By using the WiFi module 190, the mobile phone 100 can help a user to send and receive an email, browse a web page, and access streaming media. The WiFi module 190 provides wireless broadband Internet access for the user. Although FIG 1 shows the WiFi module 190, it may be understood that the WiFi module 190 is not a necessary component of the mobile phone 100 and can be omitted as required without changing the essence of the present disclosure.

The processor 130 is a control center of the mobile phone 100, and uses various interfaces and lines to connect parts of the entire mobile phone. By running or executing a software program and/or a module stored in the storage 140 and invoking data stored in the storage 140, the processor 130 executes various functions of the mobile phone 100 and processes data, thereby implementing a plurality of services based on the mobile phone. Optionally, the processor 130 may include one or more processing units. Preferably, an application processor and a modem processor may be integrated into the processor 130. The application processor mainly processes an operating system, a user interface, an application program, and the like. The modem processor mainly processes wireless communication. It may be understood that, the modem processor may not be integrated into the processor 130.

In this implementation of the present disclosure, the processor 130 can execute a program instruction stored in the storage 140, to implement the methods shown in the following implementations.

The mobile phone 100 further includes the power supply 120 (for example, a battery) that supplies power to the components. Preferably, the power supply may be logically connected to the processor 130 by using a power management system. Therefore, functions such as management of charging, discharging, and power consumption are implemented by using the power management system.

Although not shown, the mobile phone 100 may further include a camera, a Bluetooth module, and the like. Details are not described herein.

In the implementations of the present disclosure, a service recommendation platform may be provided for a terminal. The terminal includes the service recommendation platform. An application on the terminal can invoke the service recommendation platform to implement an intelligent service of the application (or a task). For example, the intelligent service of the application may be modeling based on empirical data, or may be predicting a new data trend by using a built model, for example, predicting a preference or behavior of a user, and pushing a prediction result to the user. For example, assuming that a model A can be used to predict the preference of the user, when the application is a browser, and characteristic data required by the model is search content of the user, the terminal can predict, based on the model A, that the user may search for entertainment-related content in 30% of time, search for military-related content in 30% of time, and search for other content in 40% of time. Therefore, the terminal may push more entertainment-related content and military-related content to the user. Alternatively, the terminal can predict, based on the model A, that there is a high possibility that the user searches for entertainment-related content in a time period 1, and that there is a high possibility that the user searches for military-related content in a time period 2. Therefore, the terminal may push the entertainment-related content to the user in the time period 1 and push the military-related content to the user in the time period 2. Assuming that a model B can be used to predict the behavior of the user, when the application is intelligent recommendation, the terminal can predict the behavior of the user at a specific time or in a specific scenario based on the model B, and then based on the prediction, recommend, to the user, a service required by possible behavior of the user. It should be noted that communication between the service recommendation platform provided in the implementations of the present disclosure and each application is implemented through an interface, and an intelligent service of each application and the service recommendation platform are completely decoupled.

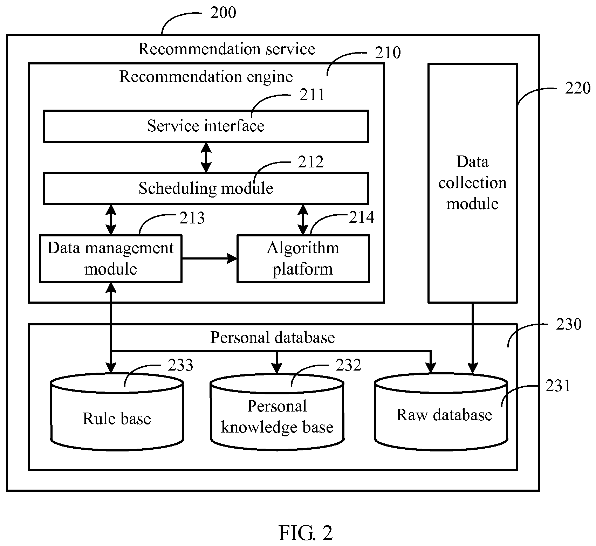

FIG 2 is a schematic architectural diagram of a service recommendation platform according to an implementation of the present disclosure. As shown in FIG 2, the service recommendation platform 200 includes a recommendation engine 210, a data collection module 220, and a personal database 230.

The recommendation engine 210 is configured to provide a recommendation capability. The recommendation engine 210 receives a service request sent by an application, and then returns a recommendation result to the application. The recommendation engine 210 includes a service interface 211, a scheduling module 212, a data management module 213, and an algorithm platform 214. The service interface 211 externally provides a service recommendation interface. The scheduling module 212 is responsible for reading a service configuration file, to be specific, reading a configuration file of the application, and providing training and prediction based on the algorithm platform 214. The scheduling module 212 is further responsible for obtaining, scheduling, and storing an external event. The training is a process of modeling or optimizing a model by using some data for a requirement, and the prediction is a result obtained through computation by using a trained model and current data. The data management module 213 is responsible for storing and escaping data, as input of the algorithm platform. The algorithm platform 214 is configured to externally provide an algorithm capability. The algorithm platform 214 may integrate a plurality of machine learning algorithms. The algorithm platform 214 can configure an algorithm in a file configuration manner, to be specific, the algorithm platform 214 can invoke algorithms based on content in a configuration file. The recommendation engine 210 may be a system-level application that runs in the background and that is not displayed in a user interface, may have system-level permission, and can provide capabilities for a plurality of applications.

The data collection module 220 is configured to collect personalized data of a user, and store the collected data into a raw database 231. When the user uses the terminal, the data collection module 220 may collect the personalized data of the user. The personalized data of the user may be, for example, an application-level user preference or system-level user behavior.

Specifically, an application level may include an application interface layer and an application framework layer. The application-level user preference includes an application use scenario and user interface behavior at the application interface layer, and a system component running status at the application framework layer. The application use scenario may include, for example, the following scenario: an application running scenario, a video scenario, a music scenario, or a food scenario. The user interface behavior in the application running scenario may include an application name, an application use time, use duration, and the like. The user interface behavior in the video scenario may include a video name, video stop time, played video episodes, total video episodes, and the like. The user interface behavior in the music scenario may include a music name, a music genre, playback duration, playback frequency, and the like. The user interface behavior in the food scenario may include a shop name, a food category, a shop address, and the like. During data collection, based on a specific situation, an image and text sensing technology may be further used to collect data. For example, text content in an image is recognized by using an optical character recognition (Optical Character Recognition, OCR for short) technology, to obtain text information in the image. The system component running status at the application framework layer may be obtained by using the following manners: Page content of news browsed by a news application and page content of a web page browsed by a browser application are obtained at the application framework layer by using a JS (JavaScript) injection technology; or all notification messages are intercepted by using a notification message interception service, and message content is parsed to obtain information such as a notification type, a scenario, time, and text content; or an application type may be recognized by hooking behavior run by an application interface, to supplement an application type that cannot be found in an application market or perform application type recognition in an offline state; or system real-time scenario information, for example, time, a date, a battery level, a network status, a headset status, a Bluetooth on/off status, an auto-rotation on/off status, and a hotspot on/off status, is obtained by using a system interface.

Specifically, the system-level user behavior may include a user action and a user scenario. Specifically, collecting user action data may include: collecting a behavioral characteristic of a user body by using a device such as a sensor, and recognizing and collecting current behavior of the user by accumulating data, for example, the following behavioral status may be recognized and collected: being in vehicle, cycling, walking, running, stationary, or another status. The sensor may include a distance sensor, an acceleration sensor, a barometric pressure sensor, a gravity sensor, a gyroscope, or the like. Collecting user scenario data may include: obtaining location information of a user by collecting a cell identity (cell ID) of a communications base station or collecting WiFi or GPS data; and obtaining a scenario which the user is in, for example, a home, an office, a foreign place, or another scenario, may be obtained based on the location information.

The personal database 230 includes the raw database 231, a personal knowledge base 232, and a rule base 233 that are used for storage. Raw data of a user is stored in the raw database 231, and the raw data is specifically personalized data that is of the user of the terminal and that is collected by the data collection module 220. The personal knowledge base 232 stores a personal label of the user. After the personalized data in the raw database 231 is analyzed or processed, the personal label of the user is obtained. The rule base 233 stores some behavior rules for analysis or other basic rules.

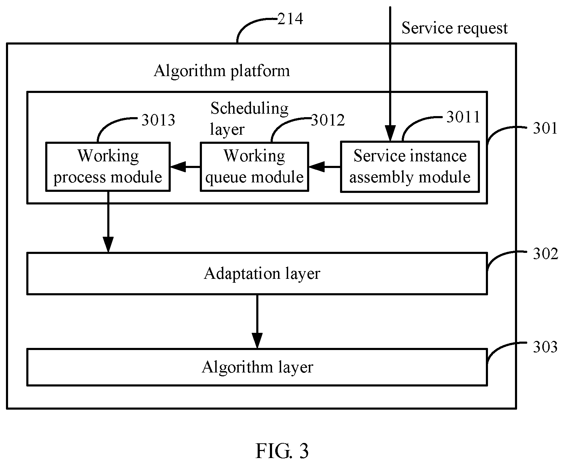

FIG 3 is a schematic architectural diagram of an algorithm platform in a service recommendation platform according to an implementation of the present disclosure. As shown in FIG 3, the algorithm platform 214 includes a scheduling layer 301, an adaptation layer 302, and an algorithm layer 303. The scheduling layer 301 includes a service instance assembly module 3011, a working queue module 3012, and a working process module 3013. The adaptation layer 302 is configured to generate, in a factory mode, a corresponding algorithm instance based on each algorithm included in an algorithm graph and data required by the algorithm. The algorithm layer 303 includes an algorithm library. The algorithm library includes one algorithm module or a plurality of algorithm modules having different functions. Each algorithm module includes at least one algorithm of a corresponding function. The algorithm library includes any one or more of the following algorithm modules: an optimization algorithm (optimization algorithms) module, a regression analysis module, a dimensionality reduction algorithm module, a classification algorithm (classification algorithms) module, a clustering algorithm (clustering algorithms) module, and a deep learning (deep learning algorithms) module.

The service instance assembly module 3011 is configured to: obtain a service request of an application and establish a service instance based on the service request.

The working queue module 3012 is configured to: schedule a service, and put an assembled service instance into a working queue. The working queue follows a first in first out (First Input First Output, FIFO) mechanism.

The working process module 3013 is configured to: receive the service instance that is first output from the working queue module, and send an algorithm graph included in the service instance to a factory mode module.

The factory mode module 3021 is configured to: invoke a machine learning algorithm at the algorithm layer based on the algorithm graph, and generate an algorithm instance having a uniform algorithm interface.

An internal I/O adaptation module 3022 is configured to determine input of each algorithm instance based on an input parameter and a data format of the algorithm instance and output of a dependency algorithm of the algorithm instance.

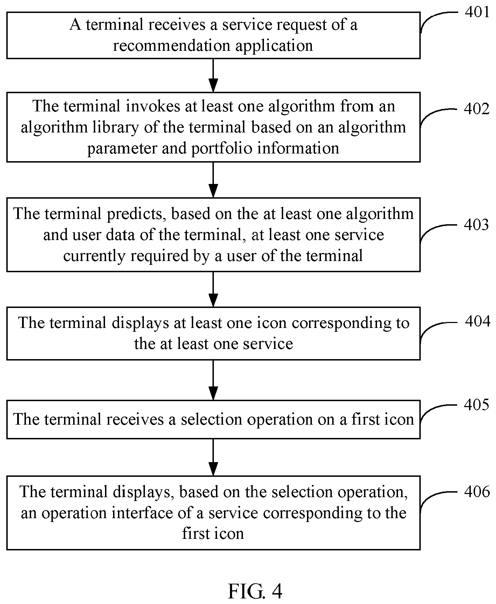

FIG 4 is a flowchart of an intelligent recommendation method applied to a terminal according to an implementation of the present disclosure. The terminal may include a plurality of applications, and may include a recommendation application. The recommendation application may recommend, to a user of the terminal, a favorite application or service of the user by using the terminal. As shown in FIG 4, the method includes the following steps.

Step 401: The terminal receives a service request of the recommendation application, where the service request may include a configuration file, and the configuration file includes at least an algorithm parameter and portfolio information that is used to identify an algorithm portfolio structure.

A recommendation service 200 in the terminal may receive the service request of the recommendation application. Specifically, a scheduling module 212 in the recommendation service 200 may receive the service request through a service interface 211. The configuration file in the service request is generated by the recommendation application in the terminal locally or stored in the terminal locally, or may be sent to the terminal by a server corresponding to the recommendation application. Further, when the recommendation application is opened, the recommendation application may send the service request. Therefore, before step 401, the method may further include the following step: receiving, by the terminal, a first touch operation used to open the recommendation application. Then in step 402, the terminal receives the service request.

The configuration file may include basic information of a service, for example, may include an algorithm parameter of a service, portfolio information that is used to identify an algorithm portfolio structure, and a storage path of data. The algorithm parameter includes an algorithm identifier and a dependency algorithm identifier. The algorithm parameter may further include any one or more of the following: an input parameter of an algorithm, a data input format of the algorithm, a data output format of the algorithm, an incremental parameter, a model parameter of the algorithm, and the like.

The algorithm parameter and the portfolio information of algorithms that are in the configuration file may be stored as a list. For example, if algorithms of a service are an algorithm A, an algorithm B, and an algorithm C, and a portfolio structure of the algorithms is: output of the algorithm A and output of the algorithm B jointly constitute input of the algorithm C, the list may be shown as Table 1:

**Table 1**

| Algorithm identifier | Dependency algorithm identifier | Data output format |
|---|---|---|
| A | Empty | Floating point type |
| B | Empty | Integer type |
| C | A and B | Integer type |

The algorithm identifier, the dependency algorithm identifier, and the data output format are algorithm parameters. The portfolio information of the algorithms is obtained based on the algorithm identifier and the dependency algorithm identifier. For example, the algorithm C depends on the algorithm A and the algorithm B, in other words, the input of the algorithm C depends on the output of the algorithm A and the output of the algorithm B. Table 1 is merely an example. In a specific implementation, the portfolio information of the algorithms may be stored in any form that can express the portfolio structure of the algorithms.

In a possible design, when sending the service request to the scheduling module 212 through the service interface 211, the recommendation application may register a callback object based on the service request. The callback object is used by the scheduling module 212 to return a computation result of the service request to the recommendation application. To be specific, the scheduling module 212 returns a recommendation result to the recommendation application based on a callback function in the callback object.

For example, the recommendation application needs to recommend, to a user based on a preference of the user, a service that the user may currently want to use. In this case, a configuration file of a service request of the recommendation application may include a parameter of each algorithm that can be used to compute the service that the user wants to use and portfolio information of the algorithms. The callback object registered by the recommendation application may instruct the scheduling module to return, to the recommendation application by using the callback function in the callback object, the service that the user currently wants to use.

Step 402: The terminal invokes at least one algorithm from an algorithm library of the terminal based on the algorithm parameter and the portfolio information. Specifically, the scheduling module 212 may invoke an algorithm platform 214 based on the algorithm parameter and the portfolio information of the algorithm that are in the service request.

In addition, a data management module 213 in a recommendation engine 210 may load current real-time scenario data from a personal database, and then encapsulate and escape the current real-time scenario data, as input data of the algorithm platform. Invoking the algorithm platform 214 by the scheduling module 212 is also based on encapsulated and escaped data output by the data management module 213.

Step 403: The terminal predicts, based on the at least one algorithm and user data of the terminal, at least one service currently required by a user of the terminal, where the user data of the terminal is stored in a personal database that is located in the terminal. Specifically, the scheduling module 212 invokes the algorithm platform 214 to predict one or more services currently required by the user of the terminal. The algorithm platform 214 receives a service request of an application, and establishes a service instance based on the service request, where the service instance includes data of a service and an algorithm graph; and then invokes the service instance to obtain a prediction result.

Step 404: The terminal displays at least one icon corresponding to the at least one service.

After the scheduling module 212 invokes the algorithm platform 214 to predict the one or more services currently required by the user of the terminal, the scheduling module 212 returns the prediction result to the recommendation application through the service interface 211, and then the recommendation application may display the prediction result. Specifically, when the terminal opens the recommendation application, the recommendation application sends a service request, and after receiving the returned prediction result, the recommendation application displays the prediction result, to be specific, displays at least one icon corresponding to the at least one service. These services are the predicted services currently required by the user. The service may be an application program or specific service content. The service content corresponds to a page of an application program. For example, the service may be an application program such as Phone, Amazon or Facebook. Alternatively, the service may be specific service content such as payment or taking a taxi.

Step 405: The terminal receives a selection operation on a first icon, where the first icon is one of the at least one icon.

Step 406: The terminal displays, based on the selection operation, an operation interface of a service corresponding to the first icon.

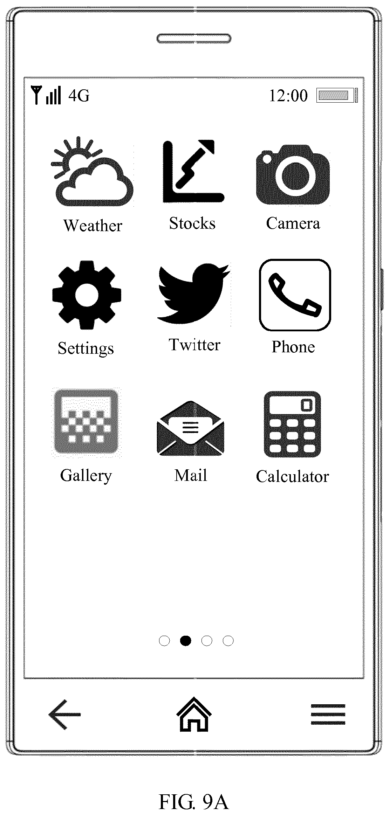

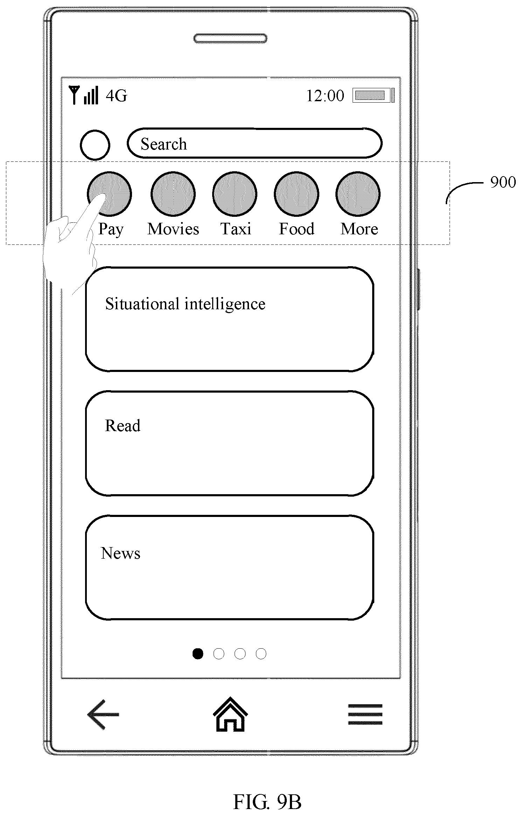

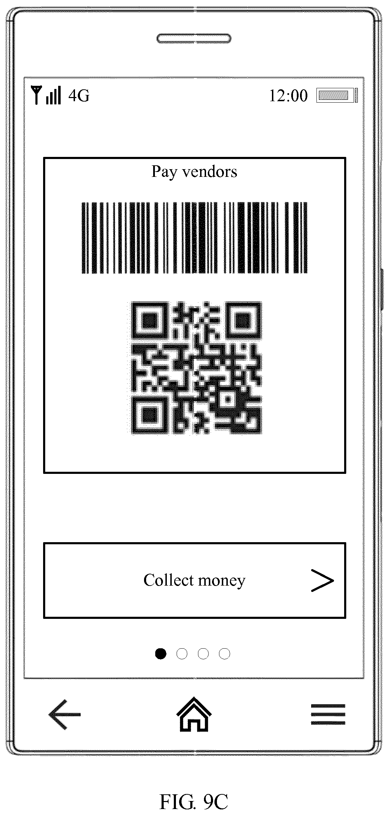

FIG 9A to FIG 9C are schematic diagrams of user interfaces when the method in this implementation is applied. FIG 9A shows a home screen displayed by the terminal. The user performs a preset operation on the home screen and can start the recommendation application. The preset operation may be, for example, flicking rightward on a screen, flicking downward on a screen, or flicking upward on a screen. As shown in FIG 9A and FIG 9B, the preset operation is flicking rightward on the screen. After the terminal detects the preset operation of the user, the recommendation application may send the service request, and then the terminal may perform step 401 to step 403. After predicting the at least one service currently required by the user, the terminal sends the prediction result to the recommendation application. Then, as shown in FIG 9B, the terminal displays a recommendation application 900, where the recommendation application 900 includes a plurality of icons corresponding to a plurality of predicted services, to be specific, step 404. As shown in FIG 9B, for example, the predicted services are payment, movies, taking a taxi, and food. In the user interface in FIG 9B, in addition to displaying the recommendation application, the terminal may further display other information unrelated to the recommendation application. Other displayed content depends on design of the user interface. In the user interface shown in FIG 9B, the user may select one of the icons, and then the terminal performs step 405 and step 406. For example, if the user selects a "Pay" icon, the terminal can directly display an operation interface corresponding to payment. As shown in FIG 9C, the terminal directly enters a payment interface. In this payment interface, the user may pay a vendor by using a bar code or a QR code, or further enter a payee interface for collecting money from another user.

After the terminal displays the at least one icon corresponding to the at least one service, the user may select a required icon from the displayed icons. After the user selects an icon, the terminal displays, based on the selection of the user, an operation interface of a service corresponding to the icon. If the service is an application program, the terminal may open the application program, and display a default startup interface of the application program or an operation interface presented when the application program is last opened. If the service is specific service content, the terminal may open an operation interface corresponding to the service content. For example, when the service is a payment service, the terminal can directly open a payment interface of an application having a payment function. In addition to the payment function, the application having the payment function may have another function. In addition, a startup interface of the application is usually not the payment interface. Based on the method in this implementation, the terminal directly recommends, to the user, an icon corresponding to a payment application. After the icon is selected by the user, the terminal can directly display a payment interface of the application, so that the user can directly use the payment function without further performing another operation. In this way, the terminal can directly recommend the specific service content to the user.

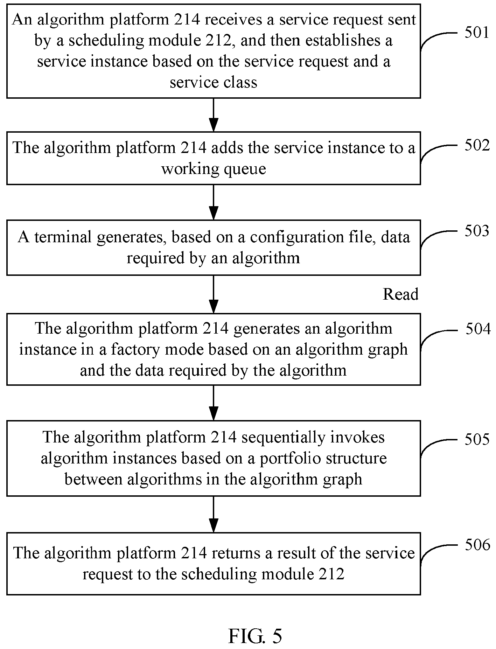

In step 403, for details of a process in which the scheduling module 212 invokes the algorithm platform 214, refer to FIG 5. FIG 5 is a flowchart of a method for invoking an algorithm platform according to an implementation of the present disclosure. Referring to FIG 3 and FIG. 5, the method includes the following steps.

Step 501: The algorithm platform 214 receives a service request sent by the scheduling module 212, and then establishes a service instance based on the service request and a service class (class), where the service request includes a configuration file.

The service class is a class defined by the scheduling layer 301 to implement uniform service request scheduling, and is used to instantiate the service request, to be specific, encapsulate data of a service and an algorithm graph. Therefore, the establishing a service instance is assembling, into an entity (object) based on the service request and the service class, the data required by the service and an operation (in other words, the algorithm graph) related to the data required by the service, and the object is the service instance.

Specifically, the scheduling layer 301 obtains the data of the service based on a storage path of the data of the service in the configuration file. The data of the service may include input data of an algorithm, parameter data used when the algorithm runs, and output data of the algorithm (including result data and intermediate data). Generally, the data of the service may be stored in a database or a storage (for example, a hard disk) of the terminal, for example, the foregoing personal database 230. The terminal can load the data of the service onto a memory.

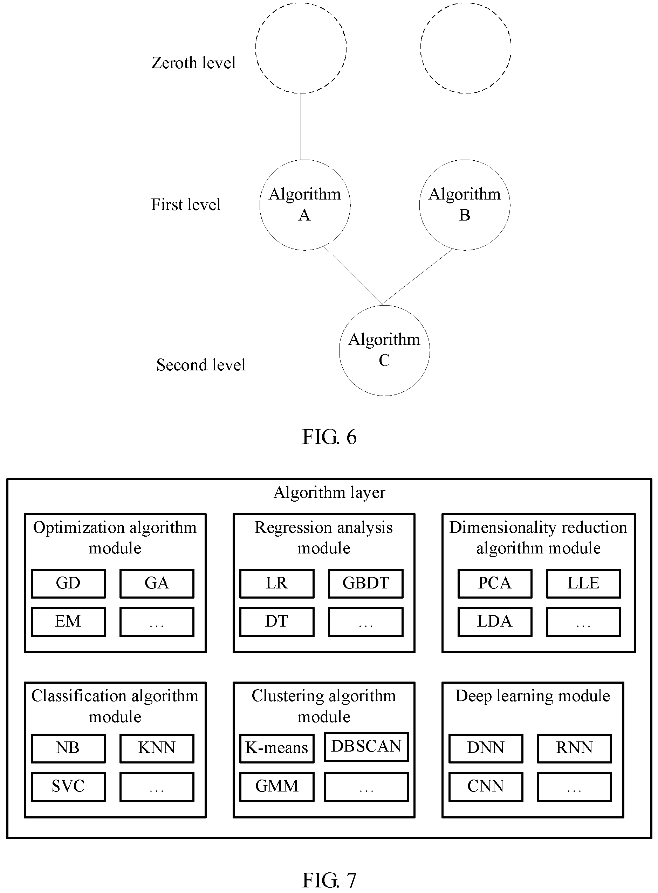

Then, the scheduling layer 301 can determine the algorithm graph based on parameters of algorithms and a portfolio structure of the algorithms in the service request. The algorithm graph is a node flowchart of algorithms. It may be understood that when the application composes a configuration file, to ensure readability, a portfolio structure of algorithms of a service and parameters of the algorithms can be stored in a form of a list. The scheduling layer 301 may further convert the list into a node flowchart of algorithms, to better schedule each algorithm. For example, in Table 1, the scheduling layer 301 may convert Table 1 into a node flowchart shown in FIG 6. For each node in the node flowchart, a previous-level node connected to the node is a dependency node of the node. To be specific, an algorithm corresponding to the previous-level node is a dependency algorithm of an algorithm corresponding to the node. For example, an algorithm A and an algorithm B have no dependency algorithm. Therefore, a zeroth level of the node flowchart is empty (shown by a dashed-line graph in the figure). Dependency algorithms of an algorithm C are the algorithm A and the algorithm B. Therefore, a first level of the node flowchart is the algorithm A and the algorithm B, a second level of the node flowchart is the algorithm C, and nodes of the algorithm A and the algorithm B are connected to a node of the algorithm C.

It may be understood that each non-empty node in the node flowchart corresponds to an algorithm, and the scheduling layer 301 can obtain a parameter of each algorithm based on the configuration file, and store the parameter of the algorithm in a corresponding node in the node flowchart.

Then, the scheduling layer 301 assembles, into an entity based on the service class, the data required by the service and the algorithm graph. In this case, the service instance is established. For details, refer to FIG 3. Step 501 may be performed by the service instance assembly module 3011 at the scheduling layer 301.

Step 502: The algorithm platform 214 adds the service instance to a working queue, to execute the service instance based on the working queue.

It may be understood that, when obtaining service requests of a plurality of services, the scheduling layer 301 may respectively establish corresponding service instances for the plurality of services based on service classes and configuration files in the service requests. For example, assuming that the service classes include a parameter 1 and a parameter 2, after receiving a first service request, the scheduling layer 301 may generate, based on a service class, a first service instance in which the parameter 1 is equal to A1 and the parameter 2 is equal to A2, and after receiving a second service request, the scheduling layer 301 may generate, based on a service class, a second service instance in which the parameter 1 is equal to B1 and the parameter 2 is equal to B2. After the scheduling layer 301 establishes the plurality of service instances at the same time based on the plurality of service requests, because the scheduling layer 301 cannot execute the plurality of service instances at the same time, a sequence of execution needs to be arranged for the plurality of established service instances.

The scheduling layer 301 can put the service instances into the working queue of the scheduling layer based on an establishment sequence of the service instances. The working queue may follow a first in first out (FIFO) mechanism, so that a service instance established first can be output from the working queue first, in other words, is executed first.

For details, refer to FIG 3. Step 502 may be performed by the working queue module 3012 at the scheduling layer 301.

Step 503: The terminal generates, based on the configuration file, data required by an algorithm. The configuration file may also include configuration information. The configuration information is used to instruct the terminal to perform data escaping, to be specific, to escape, based on the configuration information into a data format and code that are required by the algorithm, a part of the data of the service that is loaded onto the memory. Escaping means altering a meaning. Specifically, the data required by the algorithm may be generated by the data management module 213. It should be noted that in this implementation, no limitation is imposed to a sequence between step 503 and step 501/step 502. Step 503 may be performed concurrently with step 501 or step 502, or performed before step 501 or step 502.

Step 504: The algorithm platform 214 generates an algorithm instance in a factory mode based on an algorithm graph and the data required by the algorithm.

The adaptation layer 302 generates, in the factory mode, the corresponding algorithm instance based on each algorithm included in the algorithm graph and the data required by the algorithm. The factory mode is used to ensure that the generated algorithm instance has a uniform algorithm interface (Interface Algorithm), so that when the terminal invokes the algorithm instance, complex parameter definitions and interface invocation may be avoided.

For example, if the uniform algorithm interface in the factory mode is Function(parameter 1, parameter 2), all algorithms included in the algorithm graph implement Function(parameter 1, parameter 2). To be specific, definitions of all the algorithms in the algorithm graph have Function(parameter 1, parameter 2). However, depending on different algorithms, functions implemented by the Function function are also different.

In this implementation of the present disclosure, the algorithms included in the algorithm graph may be stored in the algorithm layer 303. FIG 7 is a schematic diagram of an algorithm layer according to an implementation of the present disclosure. As shown in FIG 7, the algorithms are classified into different modules based on functions, for example, an optimization algorithm (optimization algorithms) module, a regression analysis module, a dimensionality reduction algorithm module, a classification algorithm (classification algorithms) module, a clustering algorithm (clustering algorithms) module, and a deep learning algorithm (deep learning algorithms) module. The optimization algorithm module may include a gradient descent (gradient descent, GD) algorithm, a genetic algorithm (genetic algorithm, GA), an expectation-maximization algorithm (expectation-maximization algorithm, EM algorithm ), and t he like. The regression analysis module may include a logistic regression (logistic regression, LR) algorithm, a gradient boosting decision tree (gradient boosting decision tree, GBDT) algorithm, a decision tree (decision tree, DT) algorithm, and the like. The dimensionality reduction algorithm module may include a principal component analysis (principal component analysis, PCA) algorithm, a locally linear embedding (locally linear embedding, LLE) algorithm, and a linear discriminant analysis (linear discriminant analysis, LDA) algorithm. The classification algorithm module may include a Naive Bayes (Naive Bayes, NB) algorithm, a K-nearest neighbor algorithm (K-nearest neighbor algorithm, KNN), a support vector clustering (support vector clustering, SVC) algorithm, and the like. The clustering algorithm module may include a K-means algorithm, a density-based spatial clustering of applications with noise (density-based spatial clustering of applications with noise, DBSCAN) algorithm, a Gaussian Mixture Model (gaussian mixture model, GMM), and the like. The deep learning module may include a deep neural network (deep neural network, DNN) algorithm, a recurrent neural network (recurrent neural network, RNN) algorithm, a convolutional neural network (convolutional neural network, CNN) algorithm, and the like. In this implementation of the present disclosure, the algorithm exists in a form of a dynamic link library, and a Java native interface (a Java native interface, JNI) is provided for an upper module, so that a Java type application can invoke a C/C++ type algorithm.

For example, if the algorithm graph includes algorithms GD, LR, and PCA, and a portfolio structure of the algorithms is: output of the GD is input of the LR, and output of the LR is input of the PCA, the adaptation layer 302 sequentially retrieves the GD, the LR, and the PCA from the algorithm layer 303, and then generates a corresponding object for the GD, the LR, and the PCA based on data required by the algorithms and stores the object into the memory. The object herein is an algorithm instance.

It should be noted that the scheduling layer 301 may allocate a "container" to the adaptation layer 302 in advance. The "container" may be an array or a list. The adaptation layer 302 may store the generated algorithm instance into the memory and store an address of the memory into the "container" allocated by the scheduling layer 301, so that when the scheduling layer 301 invokes the algorithm instance in the subsequent steps, the scheduling layer 301 can directly obtain corresponding algorithm instances based on a uniform algorithm interface and based on addresses in the "container" in sequence.

In addition, each algorithm of the algorithm layer 303 in this implementation of the present disclosure supports operator hardware acceleration of an underlying chip, and the algorithm layer 303 in this implementation of the present disclosure may perform algorithm extension through a system update or a hot patch, and an extended algorithm and an original algorithm of the algorithm layer have a uniform algorithm interface in the factory mode.

Step 505: The algorithm platform 214 sequentially invokes algorithm instances based on a portfolio structure of algorithms in the algorithm graph.

The scheduling layer 301 sequentially invokes the corresponding algorithm instances based on the portfolio structure of the algorithms in the algorithm graph. When an algorithm instance corresponding to an algorithm that has no dependency algorithm is invoked, input required by the algorithm may be determined based on data required by the current algorithm instance. When an algorithm instance corresponding to an algorithm that has a dependency algorithm is invoked, output of the first N algorithm instances that have a dependency with the current algorithm instance may be adjusted based on data required by the current algorithm instance, and an adjusted result is used as input of the algorithm instance. The first N algorithm instances that have a dependency with the current algorithm instance are algorithm instances corresponding to dependency algorithms of the current algorithm, where N is a positive integer that is greater than or equal to 1.

For example, as shown in FIG 6, dependency algorithms of an algorithm C are an algorithm A and an algorithm B. Therefore, output of the algorithm A and output of the algorithm B may be input of the algorithm C. Further, the scheduling layer 301 further needs to adjust the output of the algorithm A and the output of the algorithm B based on data required by the algorithm C, and an adjusted result is used as the input of the algorithm C. In a possible design, the algorithm A and the algorithm B may alternatively have no input.

For details, refer to FIG 3. Step 505 may be performed by the working process module 3013 at the scheduling layer 301.

Step 506: The algorithm platform 214 returns a result of the service request to the scheduling module 212.

The algorithm platform 214 may return the result of the service request to the scheduling module 212 through an interface at the scheduling layer 301, and then the scheduling module 212 returns the result of the service request to the recommendation application. It should be noted that the scheduling module 212 may return the result of the service request to the recommendation application through a registered callback function.

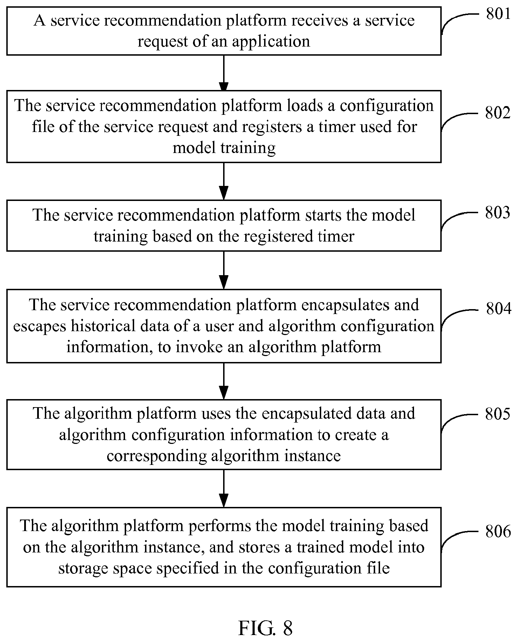

The service recommendation platform provided in the implementations of the present disclosure may be further used to perform model training. FIG 8 is a flowchart of a model training method according to an implementation of the present disclosure. As shown in FIG 8, the method includes the following steps.

Step 801: The service recommendation platform receives a service request of an application. Step 802: The service recommendation platform loads a configuration file of the service request and registers a timer used for model training.

The configuration file may include a trigger condition for starting the model training, and the timer is set based on the trigger condition.

Step 803: The service recommendation platform starts the model training based on the registered timer.

When the specified trigger condition is met, the timer expires, and then the service recommendation platform can start to perform the model training.

Step 804: The service recommendation platform encapsulates and escapes historical data of a user and algorithm configuration information, to invoke an algorithm platform.

Step 805: The algorithm platform uses the encapsulated data and algorithm configuration information to create a corresponding algorithm instance.

Step 806: The algorithm platform performs the model training based on the algorithm instance, and stores a trained model into storage space specified in the configuration file.

In the configuration file of the service request received in step 801, a storage path may be specified, so that the service recommendation platform puts the trained model into the storage path. The trained model may be used for subsequent data prediction.

By using the service recommendation platform provided in the implementations of the present disclosure, the terminal can provide a plurality of services for a user. For example:
Application suggestion service: The terminal trains, based on a historical record of each application used by the user and context information of each application historically used by the user, a predictive model for personalized application usage of the user, and when the user operates a mobile phone next time, predicts and recommends, with reference to current context information, an application that is most likely to be used by the user. The context information may be the foregoing various user data.

Geo-fencing: The terminal identifies, based on a currently connected Cell ID or Wifi ID, whether a current location of the user is a home or an office, and then recommends a corresponding service based on this.

Spam filtering: The terminal identifies spam based on an information text and automatically intercepts and filters out the spam.

Icon arrangement: The terminal automatically groups and arranges application icons based on a habit of the user of using application desktop icons.

Health assistant: The terminal calculates a health index based on historical information and mobile phone use time of the user.

Social relationship: The terminal creates a gallery people relationship group based on people who appear in a same scene in gallery images.

Price comparison: The terminal predicts a current reasonable price, for example, a rental price, based on historical prices, and gives a current reasonable rental price range based on historical rental prices in an area.

In the implementation of the present disclosure, uniform data collection, uniform data management, and a uniform algorithm library are provided, and a uniform interface is externally provided, so that the terminal can recommend a service provided that each application sets a corresponding configuration file. Because there is a uniform algorithm library, each application only needs to configure a required algorithm parameter and algorithm portfolio structure in the configuration file, and does not need to add a specific algorithm to the configuration file. In addition, a plurality of applications can share algorithms in the algorithm library. In this way, code redundancy can be reduced. In the implementation of the present disclosure, each terminal stores personal information of a user of the terminal. Compared with existing prediction that is based on network side data, prediction in the implementation of the present disclosure has higher precision.

The methods provided in the implementations of the present disclosure may be executed only on a terminal side. In other words, a service can be recommended to a user or model training can be performed only through computation on the terminal side, without participation of a server side. However, on the basis of the foregoing implementations, the server side may also participate. For example, if data on the terminal side is insufficient or a model on the terminal side is unavailable, the terminal may request data or a model from the server side and then perform computation. When the methods provided in the implementations of the present disclosure are used for training and prediction only on the terminal side, because a computing capability of the terminal side is usually lower than that of the network side, in the methods executed on the terminal side, performing lightweight training and prediction are more suitable. In other words, this implementation of the present disclosure can provide a lightweight intelligent service recommendation platform.

An implementation of the present disclosure further provides an intelligent recommendation apparatus included in the terminal. The intelligent recommendation apparatus includes an obtaining module, an invocation module, a prediction module, and a display module.

The obtaining module is configured to receive a service request of a recommendation application, where the service request includes a configuration file, the configuration file includes at least an algorithm parameter and portfolio information that is used to identify an algorithm portfolio structure, and the recommendation application is included in the terminal. The invocation module is configured to invoke at least one algorithm from an algorithm library of the terminal based on the algorithm parameter and the portfolio information. The prediction module is configured to predict, based on the at least one algorithm and user data of the terminal, at least one service currently required by a user of the terminal, where the user data of the terminal is stored in a personal database that is located in the terminal. The display module is configured to display at least one icon corresponding to the at least one service.

Further, the intelligent recommendation apparatus further includes an input module. The input module is configured to: after the display module displays the at least one icon corresponding to the at least one service, receive a selection operation on a first icon, where the first icon is one of the at least one icon. The display module is further configured to display, based on the selection operation, an operation interface of a service corresponding to the first icon.

Further, the input module is further configured to: before the obtaining module receives the service request of the recommendation application, receive a first touch operation used to open the recommendation application.

The intelligent recommendation apparatus provided in this implementation may be configured to execute the methods provided in the foregoing implementations. For a specific execution process, refer to the foregoing implementations.

The obtaining module may be included in the service interface 211 in the foregoing implementation, or included in the service interface 211 and the scheduling module 212 in the foregoing implementation. The invocation module may be included in the scheduling module 212 in the foregoing implementation, or included in the scheduling module 212 and the algorithm platform 214 in the foregoing implementation. The prediction module may be included in the algorithm platform 214 in the foregoing implementation, or included in the scheduling module 212 and the algorithm platform 214 in the foregoing implementation. The display module is equivalent to a display of the terminal. When the display of the terminal is a touchscreen, the input module is also included in the touchscreen of the terminal, in other words, the display module and the input module are equivalent to the touchscreen of the terminal. When the display of the terminal is not a touchscreen, the input module is equivalent to an input device of the terminal, for example, a keyboard or a mouse.

With descriptions of the foregoing implementations, a person skilled in the art may clearly understand that the present disclosure may be implemented by hardware, firmware or a combination thereof. When the present disclosure is implemented by software, the foregoing functions may be stored in a computer readable medium or transmitted as one or more instructions or code in the computer readable medium. The computer readable medium includes a computer storage medium and a communications medium, where the communications medium includes any medium that enables a computer program to be transferred from one place to another. The storage medium may be any available medium accessible by a computer. The following provides an example but does not impose a limitation: The computer readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in a definition of a medium to which they belong. For example, a disk (disk) or disc (disc) used by the present disclosure includes a compact disc (CD), a laser disc, an optical disc, a digital versatile disc (DVD), a floppy disk or a Blu-ray disc, where the disk generally copies data by a magnetic means, and the disc copies data optically by a laser means.

## Claims

1. An intelligent recommendation method, comprising:
receiving (401), by a terminal, a service request of a recommendation application, wherein the service request comprises a configuration file generated by the recommendation application, the configuration file comprises at least an algorithm parameter and portfolio information that is used to identify an algorithm portfolio structure, wherein the algorithm parameter comprises an algorithm identifier and a dependency algorithm identifier, wherein the portfolio information is obtained based on the algorithm identifier and the dependency algorithm identifier, and the recommendation application is comprised in the terminal;
invoking (402), by the terminal, at least one algorithm from a local algorithm library of the terminal based on the algorithm parameter and the portfolio information;
predicting (403), by the terminal based on the at least one algorithm and user data of the terminal, at least one service currently required by a user of the terminal, wherein the user data of the terminal is stored in a personal database that is located in the terminal; and
displaying (404), by the terminal, at least one icon corresponding to the at least one service, wherein
the personal database comprises a raw database, a personal knowledge base, and a rule base;
the raw database is used to store personalized data that is of the user of the terminal and that is collected by the terminal;
the personal knowledge base is used to store a personal label of the user obtained after the terminal analyzes the personalized data;
the rule base is used to store a behavior rule; and
the user data comprises the personalized data, the personal label, and the behavior rule.

2. The method according to claim 1, wherein after the displaying (404), by the terminal, at least one icon corresponding to the at least one service, the method further comprises:
receiving (405), by the terminal, a selection operation on a first icon, wherein the first icon is one of the at least one icon; and
displaying (406), by the terminal based on the selection operation, an operation interface of a service corresponding to the first icon.

3. The method according to claim 1 or 2, wherein before the receiving (401), by a terminal, a service request of a recommendation application, the method further comprises:
receiving, by the terminal, a first touch operation used to open the recommendation application.

4. The method according to any one of claims 1 to 3, wherein the displaying (404), by the terminal, at least one icon corresponding to the at least one service comprises: opening, by the terminal, the recommendation application, and displaying the at least one icon corresponding to the at least one service.

5. The method according to any one of claims 1 to 4, which is executed only on a terminal side, and the at least one service is recommended to a user or model training is performed only through computation on the terminal side, without participation of a server side, and if data on the terminal side is insufficient or a model on the terminal side is unavailable, the terminal requests the insufficient data or the unavailable model from the server side and then performs the computation.

6. The method according to any one of claims 1 to 5, wherein the algorithm library comprises at least one algorithm module, and each algorithm module comprises at least one algorithm.

7. The method according to claim 6, wherein the algorithm library comprises any one or more of the following algorithm modules: an optimization algorithm module, a regression analysis module, a dimensionality reduction algorithm module, a classification algorithm module, a clustering algorithm module, and a deep learning module.

8. The method according to any one of claims 1 to 7, wherein the algorithm parameter comprises any one or more of the following: an input parameter of an algorithm, a data input format of the algorithm, a data output format of the algorithm, an incremental parameter, and a model parameter of the algorithm.

9. A terminal (100), comprising:
a touchscreen (150);
one or more processors (130); and
one or more storages (140), wherein the one or more storages store one or more computer programs, the one or more computer programs comprise an instruction, and when the instruction is executed by the one or more processors, the terminal performs the following steps:
receiving a service request of a recommendation application, wherein the service request comprises a configuration file generated by the recommendation application, the configuration file comprises at least an algorithm parameter and portfolio information that is used to identify an algorithm portfolio structure, wherein the algorithm parameter comprises an algorithm identifier and a dependency algorithm identifier, wherein the portfolio information is obtained based on the algorithm identifier and the dependency algorithm identifier, and the recommendation application is comprised in the terminal;
invoking at least one algorithm from a local algorithm library of the terminal based on the algorithm parameter and the portfolio information;
predicting, based on the at least one algorithm and user data of the terminal, at least one service currently required by a user of the terminal, wherein the user data of the terminal is stored in a personal database that is located in the terminal; and
displaying, by using the touchscreen, at least one icon corresponding to the at least one service, wherein
the personal database comprises a raw database, a personal knowledge base, and a rule base;
the raw database is used to store personalized data that is of the user of the terminal and that is collected by the terminal;
the personal knowledge base is used to store a personal label of the user obtained after the terminal analyzes the personalized data;
the rule base is used to store a behavior rule; and
the user data comprises the personalized data, the personal label, and the behavior rule.

10. The terminal according to claim 9, wherein the one or more processors execute the instruction, so that the terminal further performs the following steps:
after displaying, by using the touchscreen, the at least one icon corresponding to the at least one service, receiving a selection operation on a first icon, wherein the first icon is one of the at least one icon; and
displaying, based on the selection operation by using the touchscreen, an operation interface of a service corresponding to the first icon.

11. The terminal according to claim 9 or 10, wherein the one or more processors execute the instruction, so that the terminal further performs the following step:
before receiving the service request of the recommendation application, receiving a first touch operation used to open the recommendation application.

12. The terminal according to any one of claims 9 to 11, wherein in the step of displaying, by using the touchscreen, at least one icon corresponding to the at least one service, the one or more processors execute the instruction, so that the terminal performs the following steps:
opening the recommendation application, and displaying, by using the touchscreen, the at least one icon corresponding to the at least one service.

13. The terminal according to any one of claims 9 to 12,
wherein the at least one service is recommended to a user or model training is performed only through computation on the terminal side, without participation of a server side, and if data on the terminal side is insufficient or a model on the terminal side is unavailable, the terminal is configured to request the insufficient data or the unavailable model from the server side and perform the computation.

14. The terminal according to any one of claims 9 to 13, wherein the algorithm library comprises at least one algorithm module, and each algorithm module comprises at least one algorithm;
wherein the algorithm library comprises any one or more of the following algorithm modules: an optimization algorithm module, a regression analysis module, a dimensionality reduction algorithm module, a classification algorithm module, a clustering algorithm module, and a deep learning module.

15. The terminal according to any one of claims 9 to 14, wherein the algorithm parameter comprises any one or more of the following: an input parameter of an algorithm, a data input format of the algorithm, a data output format of the algorithm, an incremental parameter, and a model parameter of the algorithm.

## Patentansprüche

1. Intelligentes Empfehlungsverfahren, umfassend:
Empfangen (401), durch ein Endgerät, einer Dienstanforderung einer Empfehlungsanwendung, wobei die Dienstanforderung eine Konfigurationsdatei umfasst, die durch die Empfehlungsanwendung erzeugt wurde, die Konfigurationsdatei mindestens einen Algorithmusparameter und Portfolioinformationen umfasst, die dazu verwendet werden, eine Algorithmusportfoliostruktur zu identifizieren, wobei der Algorithmusparameter eine Algorithmuskennung und eine Abhängigkeitsalgorithmuskennung umfasst, wobei die Portfolioinformationen basierend auf der Algorithmuskennung und der Abhängigkeitsalgorithmuskennung erlangt werden und die Empfehlungsanwendung in dem Endgerät umfasst ist;
Aufrufen (402), durch das Endgerät, mindestens eines Algorithmus aus einer lokalen Algorithmusbibliothek des Endgeräts basierend auf dem Algorithmusparameter und den Portfolioinformationen;
Vorhersagen (403), durch das Endgerät, basierend auf dem mindestens einen Algorithmus und Benutzerdaten des Endgeräts, mindestens eines Dienstes, der derzeit von einem Benutzer des Endgeräts benötigt wird, wobei die Benutzerdaten des Endgeräts in einer persönlichen Datenbank gespeichert sind, die sich in dem Endgerät befindet; und
Anzeigen (404), durch das Endgerät, mindestens eines Symbols, das dem mindestens einen Dienst entspricht, wobei
die persönliche Datenbank eine Rohdatenbank, eine persönliche Wissensdatenbank und eine Regeldatenbank umfasst;
die Rohdatenbank dazu verwendet wird, personalisierte Daten zu speichern, die sich auf den Benutzer des Endgeräts beziehen und die durch das Endgerät erfasst werden;
die persönliche Wissensdatenbank dazu verwendet wird, um eine persönliche Bezeichnung des Benutzers zu speichern, die erlangt wird, nachdem das Endgerät die personalisierten Daten analysiert;
die Regelbasis dazu verwendet wird, eine Verhaltensregel zu speichern; und
die Benutzerdaten die personalisierten Daten, die persönliche Bezeichnung und die Verhaltensregel umfassen.

2. Verfahren nach Anspruch 1, wobei das Verfahren nach dem Anzeigen (404), durch das Endgerät, mindestens eines Symbols, das dem mindestens einen Dienst entspricht, ferner Folgendes umfasst:
Empfangen (405), durch das Endgerät, eines Auswahlvorgangs für ein erstes Symbol, wobei das erste Symbol eines des mindestens einen Symbols ist; und
Anzeigen (406), durch das Endgerät, basierend auf dem Auswahlvorgang, einer Bedienoberfläche eines Dienstes, der dem ersten Symbol entspricht.

3. Verfahren nach Anspruch 1 oder 2, wobei das Verfahren vor dem Empfangen (401), durch ein Endgerät, einer Dienstanforderung einer Empfehlungsanwendung ferner Folgendes umfasst:
Empfangen, durch das Endgerät, eines ersten Berührungsvorgangs, der dazu verwendet wird, die Empfehlungsanwendung zu öffnen.

4. Verfahren nach einem der Ansprüche 1 bis 3, wobei das Anzeigen (404), durch das Endgerät, mindestens eines Symbols, das dem mindestens einen Dienst entspricht, Folgendes umfasst: Öffnen, durch das Endgerät, der Empfehlungsanwendung und Anzeigen des mindestens einen Symbols, das dem mindestens einen Dienst entspricht.

5. Verfahren nach einem der Ansprüche 1 bis 4, das nur auf einer Endgerätseite ausgeführt wird und wobei der mindestens eine Dienst einem Benutzer empfohlen wird oder Trainieren eines Modells nur mittels Berechnung auf der Endgerätseite ohne Beteiligung einer Serverseite durchgeführt wird, und, wenn Daten auf der Endgerätseite nicht ausreichen oder ein Modell auf der Endgerätseite nicht verfügbar ist, das Endgerät die unzureichenden Daten oder das nicht verfügbare Modell von der Serverseite anfordert und dann die Berechnung durchführt.

6. Verfahren nach einem der Ansprüche 1 bis 5, wobei die Algorithmusbibliothek mindestens ein Algorithmusmodul umfasst und jedes Algorithmusmodul mindestens einen Algorithmus umfasst.

7. Verfahren nach Anspruch 6, wobei die Algorithmusbibliothek ein beliebiges oder mehrere beliebige der folgenden Algorithmusmodule umfasst: ein Optimierungsalgorithmusmodul, ein Regressionsanalysemodul, ein Dimensionsreduktionsalgorithmusmodul, ein Klassifizierungsalgorithmusmodul, ein Clustering-Algorithmusmodul und ein Deep-Learning-Modul.

8. Verfahren nach einem der Ansprüche 1 bis 7, wobei der Algorithmusparameter einen beliebigen oder mehrere beliebige der Folgenden umfasst: einen Eingabeparameter eines Algorithmus, ein Dateneingabeformat des Algorithmus, ein Datenausgabeformat des Algorithmus, einen inkrementellen Parameter und einen Modellparameter des Algorithmus.

9. Endgerät (100), umfassend:
einen Touchscreen (150);
einen oder mehrere Prozessoren (130); und
einen oder mehrere Speicher (140), wobei der eine oder die mehreren Speicher ein oder mehrere Computerprogramme speichern, das eine oder die mehreren Computerprogramme eine Anweisung umfassen und, wenn die Anweisung durch den einen oder die mehreren Prozessoren ausgeführt wird, das Endgerät die folgenden Schritte durchführt:
Empfangen einer Dienstanforderung einer Empfehlungsanwendung, wobei die Dienstanforderung eine Konfigurationsdatei umfasst, die durch die Empfehlungsanwendung erzeugt wurde, die Konfigurationsdatei mindestens einen Algorithmusparameter und Portfolioinformationen umfasst, die dazu verwendet werden, eine Algorithmusportfoliostruktur zu identifizieren, wobei der Algorithmusparameter eine Algorithmuskennung und eine Abhängigkeitsalgorithmuskennung umfasst, wobei die Portfolioinformationen basierend auf der Algorithmuskennung und der Abhängigkeitsalgorithmuskennung erlangt werden und die Empfehlungsanwendung in dem Endgerät umfasst ist;
Aufrufen mindestens eines Algorithmus aus einer lokalen Algorithmusbibliothek des Endgeräts basierend auf dem Algorithmusparameter und den Portfolioinformationen;
Vorhersagen, basierend auf dem mindestens einen Algorithmus und Benutzerdaten des Endgeräts, mindestens eines Dienstes, der derzeit von einem Benutzer des Endgeräts benötigt wird, wobei die Benutzerdaten des Endgeräts in einer persönlichen Datenbank gespeichert sind, die sich in dem Endgerät befindet; und
Anzeigen, unter Verwendung des Touchscreens, mindestens eines Symbols, das dem mindestens einen Dienst entspricht, wobei
die persönliche Datenbank eine Rohdatenbank, eine persönliche Wissensdatenbank und eine Regeldatenbank umfasst;
die Rohdatenbank dazu verwendet wird, personalisierte Daten zu speichern, die sich auf den Benutzer des Endgeräts beziehen und die durch das Endgerät erfasst werden;
die persönliche Wissensdatenbank dazu verwendet wird, um eine persönliche Bezeichnung des Benutzers zu speichern, die erlangt wird, nachdem das Endgerät die personalisierten Daten analysiert;
die Regelbasis dazu verwendet wird, eine Verhaltensregel zu speichern; und
die Benutzerdaten die personalisierten Daten, die persönliche Bezeichnung und die Verhaltensregel umfassen.

10. Endgerät nach Anspruch 9, wobei der eine oder die mehreren Prozessoren die Anweisung ausführen, so dass das Endgerät ferner die folgenden Schritte durchführt:
nach dem Anzeigen, unter Verwendung des Touchscreens, des mindestens einen Symbols, das dem mindestens einen Dienst entspricht, Empfangen eines Auswahlvorgangs für ein erstes Symbol, wobei das erste Symbol eines des mindestens einen Symbols ist; und
Anzeigen, basierend auf dem Auswahlvorgang, unter Verwendung des Touchscreens, einer Bedienoberfläche eines Dienstes, der dem ersten Symbol entspricht.

11. Endgerät nach Anspruch 9 oder 10, wobei der eine oder die mehreren Prozessoren die Anweisung ausführen, so dass das Endgerät ferner den folgenden Schritt durchführt:
vor dem Empfangen der Dienstanforderung der Empfehlungsanwendung, Empfangen eines ersten Berührungsvorgangs, um die Empfehlungsanwendung zu öffnen.

12. Endgerät nach einem der Ansprüche 9 bis 11, wobei in dem Schritt des Anzeigens, unter Verwendung des Touchscreens, mindestens eines Symbols, das dem mindestens einen Dienst entspricht, der eine oder die mehreren Prozessoren die Anweisung ausführen, so dass das Endgerät die folgenden Schritte durchführt:
Öffnen der Empfehlungsanwendung und Anzeigen, unter Verwendung des Touchscreens, des mindestens einen Symbols, das dem mindestens einen Dienst entspricht.

13. Endgerät nach einem der Ansprüche 9 bis 12,
wobei der mindestens eine Dienst einem Benutzer empfohlen wird oder Trainieren eines Modells nur mittels Berechnung auf der Endgerätseite ohne Beteiligung einer Serverseite durchgeführt wird, und, wenn Daten auf der Endgerätseite nicht ausreichen oder ein Modell auf der Endgerätseite nicht verfügbar ist, das Endgerät dazu konfiguriert ist, die unzureichenden Daten oder das nicht verfügbare Modell von der Serverseite anzufordern und die Berechnung durchzuführen.

14. Endgerät nach einem der Ansprüche 9 bis 13, wobei die Algorithmusbibliothek mindestens ein Algorithmusmodul umfasst und jedes Algorithmusmodul mindestens einen Algorithmus umfasst;
wobei die Algorithmusbibliothek ein beliebiges oder mehrere beliebige der folgenden Algorithmusmodule umfasst: ein Optimierungsalgorithmusmodul, ein Regressionsanalysemodul, ein Dimensionsreduktionsalgorithmusmodul, ein Klassifizierungsalgorithmusmodul, ein Clustering-Algorithmusmodul und ein Deep-Learning-Modul.

15. Endgerät nach einem der Ansprüche 9 bis 14, wobei der Algorithmusparameter einen beliebigen oder mehrere beliebige der Folgenden umfasst: einen Eingabeparameter eines Algorithmus, ein Dateneingabeformat des Algorithmus, ein Datenausgabeformat des Algorithmus, einen inkrementellen Parameter und einen Modellparameter des Algorithmus.

## Revendications

1. Procédé intelligent de recommandations, comprenant :
la réception (401), par un terminal, d'une demande de service d'une application de recommandations, dans lequel la demande de service comprend un fichier de configuration généré par l'application de recommandations, le fichier de configuration comprend au moins un paramètre d'algorithme et des informations de portefeuille qui sont utilisées pour identifier une structure de portefeuille d'algorithme, dans lequel le paramètre d'algorithme comprend un identifiant d'algorithme et un identifiant d'algorithme de dépendance, dans lequel les informations de portefeuille sont obtenues sur la base de l'identifiant d'algorithme et de l'identifiant d'algorithme de dépendance, et l'application de recommandations est comprise dans le terminal ;
l'invocation (402), par le terminal, d'au moins un algorithme provenant d'une bibliothèque d'algorithmes locale du terminal sur la base du paramètre d'algorithme et des informations de portefeuille ;
la prédiction (403), par le terminal sur la base de l'au moins un algorithme et de données d'utilisateur du terminal, d'au moins un service actuellement requis par un utilisateur du terminal, dans lequel les données d'utilisateur du terminal sont stockées dans une base de données personnelle qui est située dans le terminal ; et
l'affichage (404), par le terminal, d'au moins une icône correspondant à l'au moins un service, dans lequel
la base de données personnelles comprend une base de données brutes, une base de connaissances personnelles, et une base de règles ;
la base de données brutes est utilisée pour stocker des données personnalisées qui sont de l'utilisateur du terminal et qui sont collectées par le terminal ;
la base de connaissances personnelles est utilisée pour stocker une étiquette personnelle de l'utilisateur obtenue après que le terminal a analysé les données personnalisées ;
la base de règles est utilisée pour stocker une règle de comportement ; et
les données d'utilisateur comprennent les données personnalisées, l'étiquette personnelle, et la règle de comportement.

2. Procédé selon la revendication 1, dans lequel, après l'affichage (404), par le terminal, d'au moins une icône correspondant à l'au moins un service, le procédé comprend également :
la réception (405), par le terminal, d'une opération de sélection sur une première icône, dans lequel la première icône est l'une de l'au moins une icône ; et
l'affichage (406), par le terminal sur la base de l'opération de sélection, d'une interface d'opération d'un service correspondant à la première icône.

3. Procédé selon la revendication 1 ou 2, dans lequel, avant la réception (401), par un terminal, d'une demande de service d'une application de recommandations, le procédé comprend également :
la réception, par le terminal, d'une première opération tactile utilisée pour ouvrir l'application de recommandations.

4. Procédé selon l'une quelconque des revendications 1 à 3, dans lequel l'affichage (404), par le terminal, d'au moins une icône correspondant à l'au moins un service comprend : l'ouverture, par le terminal, de l'application de recommandations, et l'affichage de l'au moins une icône correspondant à l'au moins un service.

5. Procédé selon l'une quelconque des revendications 1 à 4, lequel est exécuté uniquement sur un côté terminal, et l'au moins un service est recommandé à un utilisateur ou l'entraînement du modèle est réalisé uniquement par calcul sur le côté terminal, sans participation d'un côté serveur, et si les données sur le côté terminal sont insuffisantes ou un modèle sur le côté terminal n'est pas disponible, le terminal demande les données insuffisantes ou le modèle indisponible provenant du côté serveur et réalise ensuite le calcul.

6. Procédé selon l'une quelconque des revendications 1 à 5, dans lequel la bibliothèque d'algorithmes comprend au moins un module d'algorithme, et chaque module d'algorithme comprend au moins un algorithme.

7. Procédé selon la revendication 6, dans lequel la bibliothèque d'algorithmes comprend l'une quelconque ou plusieurs des modules d'algorithme suivants : un module d'algorithme d'optimisation, un module d'analyse de régression, un module d'algorithme de réduction de dimensionnalité, un module d'algorithme de classification, un module d'algorithme de regroupement, et un module d'apprentissage profond.

8. Procédé selon l'une quelconque des revendications 1 à 7, dans lequel le paramètre d'algorithme comprend un ou plusieurs des éléments suivants : un paramètre d'entrée d'un algorithme, un format d'entrée de données de l'algorithme, un format de sortie de données de l'algorithme, un paramètre incrémentiel, et un paramètre de modèle de l'algorithme.

9. Terminal (100), comprenant :
un écran tactile (150) ;
un ou plusieurs processeurs (130) ; et
un ou plusieurs stockages (140), dans lequel les un ou plusieurs stockages stockent un ou plusieurs programmes informatiques, les un ou plusieurs programmes informatiques comprennent une instruction, et lorsque l'instruction est exécutée par les un ou plusieurs processeurs, le terminal réalise les étapes suivantes :
la réception d'une demande de service d'une application de recommandations, dans lequel la demande de service comprend un fichier de configuration généré par l'application de recommandations, le fichier de configuration comprend au moins un paramètre d'algorithme et des informations de portefeuille qui sont utilisées pour identifier une structure de portefeuille d'algorithme, dans lequel le paramètre d'algorithme comprend un identifiant d'algorithme et un identifiant d'algorithme de dépendance, dans lequel les informations de portefeuille sont obtenues sur la base de l'identifiant d'algorithme et de l'identifiant d'algorithme de dépendance, et l'application de recommandations est comprise dans le terminal ;
l'invocation d'au moins un algorithme provenant d'une bibliothèque d'algorithmes locale du terminal sur la base du paramètre d'algorithme et des informations de portefeuille ;
la prédiction sur la base de l'au moins un algorithme et de données d'utilisateur du terminal, d'au moins un service actuellement requis par un utilisateur du terminal, dans lequel les données d' utilisateur du terminal sont stockées dans une base de données personnelles qui est située dans le terminal ; et
l'affichage, en utilisant l'écran tactile, d'au moins une icône correspondant à l'au moins un service, dans lequel
la base de données personnelles comprend une base de données brutes, une base de connaissances personnelles, et une base de règles ;
la base de données brutes est utilisée pour stocker des données personnalisées qui sont de l'utilisateur du terminal et qui sont collectées par le terminal ;
la base de connaissances personnelles est utilisée pour stocker une étiquette personnelle de l'utilisateur obtenue après que le terminal a analysé les données personnalisées ;
la base de règles est utilisée pour stocker une règle de comportement ; et
les données d'utilisateur comprennent les données personnalisées, l'étiquette personnelle, et la règle de comportement.

10. Procédé selon la revendication 9, dans lequel les un ou plusieurs processus exécutent l'instruction, de sorte que le terminal réalise également les étapes suivantes :
après l'affichage, en utilisant l'écran tactile, de l'au moins une icône correspondant à l'au moins un service, la réception d'une opération de sélection sur une première icône, dans lequel la première icône est l'une de l'au moins une icône ; et
l'affichage, sur la base de l'opération de sélection en utilisant l'écran tactile, d'une interface d'opération d'un service correspondant à la première icône.

11. Terminal selon la revendication 9 ou 10, dans lequel les un ou plusieurs processeurs exécutent l'instruction, de sorte que le terminal réalise également l'étape suivante :
avant la réception de la demande de service de l'application de recommandations, la réception d'une première opération tactile utilisée pour ouvrir l'application de recommandations.

12. Terminal selon l'une quelconque des revendications 9 à 11, dans lequel, lors de l'étape de l'affichage, en utilisant l'écran tactile, d'au moins une icône correspondant à l'au moins un service, les un ou plusieurs processeurs exécutent l'instruction, de sorte que le terminal réalise les étapes suivantes :
l'ouverture de l'application de recommandations, et l'affichage, en utilisant l'écran tactile, de l'au moins une icône correspondant à l'au moins un service.

13. Terminal selon l'une quelconque des revendications 9 à 12,
dans lequel l'au moins un service est recommandé à un utilisateur ou l'entraînement du modèle est réalisé uniquement par calcul sur le côté terminal, sans participation d'un côté serveur, et si les données sur le côté terminal sont insuffisantes ou un modèle sur le côté terminal n'est pas disponible, le terminal est configuré pour demander les données insuffisantes ou le modèle indisponible provenant du côté serveur et réaliser le calcul.

14. Terminal selon l'une quelconque des revendications 9 à 13, dans lequel la bibliothèque d'algorithmes comprend au moins un module d'algorithme, et chaque module d'algorithme comprend au moins un algorithme ;
dans lequel la bibliothèque d'algorithmes comprend l'une quelconque ou plusieurs des modules d'algorithme suivants : un module d'algorithme d'optimisation, un module d'analyse de régression, un module d'algorithme de réduction de dimensionnalité, un module d'algorithme de classification, un module d'algorithme de regroupement, et un module d'apprentissage profond.

15. Terminal selon l'une quelconque des revendications 9 à 14, dans lequel le paramètre d'algorithme comprend l'un quelconque ou plusieurs des éléments suivants : un paramètre d'entrée d'un algorithme, un format d'entrée de données de l'algorithme, un format de sortie de données de l'algorithme, un paramètre incrémentiel, et un paramètre de modèle de l'algorithme.
